Europäisches Patentamt

European Patent Office

Office européen des brevets

(19)

(11) Publication number: **0 138 290 B2**

# (12) NEW EUROPEAN PATENT SPECIFICATION

(45) Date of publication of the new patent
specification : **31.07.91 Bulletin 91/31**

(21) Application number : **84304034.6**

(22) Date of filing : **15.06.84**

(51) Int. Cl.⁵ : **B65D 35/44,** B65D 51/20,
B32B 15/08

(54) **Collapsible dispensing containers, methods of hermetically sealing such containers and sheet materials for sealing such containers.**

(30) Priority : **15.09.83 US 532440**

(43) Date of publication of application :
**24.04.85 Bulletin 85/17**

(45) Publication of the grant of the patent :
**09.12.87 Bulletin 87/50**

(45) Mention of the opposition decision :
**31.07.91 Bulletin 91/31**

(84) Designated Contracting States :
**AT BE CH DE FR GB IT LI LU NL SE**

(56) References cited :
**CH-A- 533 045
DE-A- 3 212 990
DE-A-96 079 4
DE-B- 1 041 414
DE-C- 1 486 193
FR-A- 2 320 870
GB-A- 1 454 569
US-A- 3 976 224**

(73) Proprietor : **AMERICAN NATIONAL CAN
COMPANY
8770 West Bryn Mawr Avenue
Chicago, Illinois 60631 (US)**

(72) Inventor : **Eckstein, John P.
1206 Glenayre Drive
Neenah Wisconsin 54956 (US)**
Inventor : **Gillespie, William S.
140 W.Hillside Avenue
Barrington Illinois 60010 (US)**
Inventor : **Schaefer, Suzanne E.
2361 Fiesta Court
Neenah Wisconsin 54956 (US)**

(74) Representative : **Holdcroft, James Gerald, Dr.
et al
Graham Watt & Co., Riverhead
Sevenoaks, Kent TN13 2BN (GB)**

EP 0 138 290 B2

## Description

This invention relates generally to collapsible dispensing containers such as dispensing tubes, and is particularly concerned with hermetically sealing such containers. In one aspect of the invention, the dispensing orifice of a collapsible container is sealed with a pierceable laminated sheet, and in another aspect, the laminated sheet is sealed to the orifice by radio-frequency heating.

Metal dispensing tubes often have thin metal diaphragms sealing their dispensing orifices. This metal diaphragm ; often made integral with the metal tube, is generally known within the trade as a "blind head". Typically, the metal tube will have a closure cap on it and the cap will feature a pointed element for piercing the blind head in order to allow dispensing of the contained product from the tube.

While metal tubes have long been used commercially, they have drawbacks. Recently attention and interest have been focused on plastics and laminated containers. Plastics and laminated tubes are usually less costly than metal tubes and are less susceptible to chemical attack by certain products. Also, users frequently roll up the closed ends of tubes as their contents are dispensed and metal tubes tend to fracture or crack with fewer rollings than do laminated tubes.

Because of these superior performance characteristics of plastic and laminated tubes, these tubes today hold a large share of the dispensing tube market. One disadvantage of these tubes, however, is that they are typically closed on the dispensing end only by a plastic screw-on cap. So far as we can discern there is no known use of any hermetic seal on the dispensing end of the plastics or laminated tubes. The lack of a hermetic seal presents a number of problems which depend on the types of products contained and their sensitivity to the problems presented by this screw-on closure. Some products are reactive with gases in the air, such as oxygen, and the normal gaseous infusion noticeably affects product life. Some products desirably packaged in a tube are rather liquidous, and are not adequately contained for longer term storage, such as in commercial inventory, by a closure which simply comprises a screw-on cap. Recent events have led also to an increased level of concern regarding malicious tampering with, or contamination of, products which may be ingested, or dispensed onto sensitive tissue. Such tampering is easily accomplished with unprotected tube containers by removing the tube cap, doing whatever tampering is contemplated, and then replacing the cap. There is often no way of detecting such tampering.

The problem of sealing an orifice in a bottle-type container for food or pharmaceuticals has been handled by applying a sealant sheet material over the bottle opening before the cap is put on or during cap emplacement. Such sheet materials are sold by the 3M Company of St. Paul, Minnesota as product numbers 75M, 456M and 603. The structures of these products are as follows :

| Components | 75M | | 456M | | 603 | |
|---|---|---|---|---|---|---|
| White pulpboard | 0.035" | (0.89) | None | | None | |
| Wax | 0.00045" | (0.01) | None | | None | |
| Aluminum Foil | 0.001" | (0.02) | 0.002" | (0.05) | 0.003" | (0.08) |
| Adhesive | | | Negligible thickness | | | |
| Heat Sealable Polyester Film | 0.002" | (0.05) | 0.00045" | (0.01) | 0.002" | (0.05) |

The figures given above in parentheses are the equivalent thicknesses in millimetres.

These sheet materials are intended to be torn off the bottle and disposed of when the bottle is first opened. When these materials were tested for dispensing tubes, they were all found too difficult to pierce, and all significantly impeded dispensing of the product, by restricting the functional size of the orifice.

A typical plastics laminated material which is subjected to dead-folding, and is used as the body of a tube sidewall, is disclosed in US-A 3,505,143. The tube sidewall is, of course, intended to resist piercing, and therefore this patent is not concerned with a pierceable sealant sheet material.

Another plastics laminated material which is subjected to dead-folding is disclosed in US-A 3,976,224. Again, the disclosed structures are intended to be used as tube sidewalls and are resistant to piercing.

An object of this invention is to provide a collapsible dispensing tube which has its orifice hermetically sealed with a laminated foil and plastics sheet which is preferably applied by heat sealing or by the application of radio-frequency heating, the adhesion between the foil and polymeric layers of the laminated sheet being such that the polymeric layers puncture rather than stretch upon piercing said laminated sheet to open the orifice, the laminated sheet when pierced being interference with standard closure caps, requiring special cap rede-

EP 0 138 290 B2

sign. Also, the thicker sheet materials are more difficult to puncture.

An embodiment of the invention to be described in detail is a collapsible dispensing tube having a headpiece with a dispensing orifice therein and a body extending from the headpiece. The laminated sheet material has first and second outer surface layers and is sealed to the headpiece across the outer end of the orifice by the first outer layer, which is a sealant layer, to close the orifice. The sheet material has first and second layers of metal foil and a third layer of polymer is disposed between them and is firmly adhered thereto. A fourth polymer layer outside the composite structure comprising the first, second and third layers, is firmly adhered to the first layer, the fourth layer being the above-mentioned outer surface sealant, and serving to keep the sheet material adhered to the headpiece across the outer end of the orifice opening. The second outer surface layer is the second metal foil layer.

In another embodiment of the invention, a fifth layer of polymer, is disposed on the outer surface of the fourth layer and then functions as the first outer layer. Also, in yet another embodiment of the invention, capable of conforming to the interior of the orifice.

Beneficially, this invention will be implemented with a readily pierceable orifice seal which, when pierced, does not interfere with dispensing of the product from the container. The invention is able to provide hermetically sealed containers which are tamperindicative and which can afford the consumer a ready means of detecting visually if the container contents have been tampered with.

The present invention provides a collapsible dispensing tube having a body and a headpiece with a dispensing orifice therein, and a multiple layer sheet material having first and second outer surface layers the first of which is adhered to the outer end of the headpiece orifice for closing the orifice, the sheet material comprising first and second layers of metal foil, and a third layer of polymeric material, disposed between and firmly adhered to the first and second layers, and a fourth layer of polymeric material, firmly adhered to first layer, said fourth layer comprising the first outer surface layer of the sheet material and being the means which maintains the sheet material adhered to the headpiece, the sheet material having an overall thickness in the range of 5.0 - 8.0 mils (0.13 - 0.20 mm), the aggregate thickness of the two foil layers being 3 to less than 5 mils (0.08 - 0.13 mm).

The invention also provides a method of hermetically sealing a collapsible dispensing tube which includes a headpiece having a dispensing orifice, the method comprising adhering a multiple layer sheet material having first and second outer surface layers over the outer end of said orifice and thereby closing and sealing said orifice, the multiple layer sheet material comprising first and second layers of metal foil, a third layer of polymeric material, disposed between the first and second layers and firmly adhered thereto, and a fourth layer of polymeric material, firmly adhered to said first layer, the fourth layer comprising the first outer surface layer of the sheet material and in use being the means which maintains the sheet material adhered to said headpiece, the sheet material having an overall thickness in the range of 5.0 - 8.0 mils (0.13 -0.20 mm), the aggregate thickness of the two foil layers being 3 to less than 5 mils (0.08 - 0.13 mm).

The invention also provides a deadfoldable multilayer sheet material for use in sealing the outer ends of dispensing orifices of squeeze-type dispensing tubes, comprising two metal foil layers, at least one polymeric material layer between the foil layers and firmly adhered thereto, and another polymeric material layer adhered directly or by means of a further polymeric layer or layers to one of the metal foil layers, the other polymeric layer providing one of the exterior surfaces of the sheet material and being a heat-activatable polymeric adherent, the sheet material having an overall thickness in the range of 5.0 - 8.0 mils (0.13 - 0.20 mm), the aggregate thickness of the two foil layers being 3 to less than 5 mils (0.08 - 0.13 mm).

It has been found that the orifice of a collapsible dispensing tube can be hermetically sealed with a unique multilayer laminate structure. Surprisingly, when the preferred laminated sheet is pierced and displaced interiorly of the orifice, it will conform to the interior surface of the orifice because of the excellent deadfold retention characteristic of the sheet. Therefore, the tube contents may be dispensed without obstruction or interference from the interiorly-displaced laminated sheet.

The laminated sheet has a minimum overall thickness of 5.0 mils (0.13 mm) to ensure good deadfold retention. A practical maximum overall thickness is 8.0 mils (0.20 mm). Within the range of 5.0 to 8.0 mils (0.13 to 0.20 mm) thickness, the sheet materials used in this invention function well. At thicknesses over 8.0 mils (0.20 mm), the sheet materials encounter additional polymer layers may be disposed between the first and second foil layers. It may be advantageous to include both the fifth layer on the outer surface of the fourth layer, and the additional polymer layers between the first and second foil layers when making a composite according to the invention.

For ease of functioning and use of the dispensing tubes of the invention, they are desirably capped with a cap designed with a piercing means which can, concurrently with piercing the seal, fold the pierced sheet against the interior wall of the dispensing orifice. While certain conventional caps are more efficient for piercing and folding than others, the design of the cap piercing means is generally not critical. Suitable caps may be

3

selected from standard designs currently available from suppliers in the marketplace.

Sealing of the orifice by means of the laminated sheet may be effected by heat sealing or, as will be more fully described hereafter, advantageously by the application of radio-frequency heating.

Embodiments of the invention will now be described in more detail by way of example only with reference to the accompanying drawings, in which :

Figure 1 is a cross-section of a multilayer sheet material embodying this invention ;

Figure 2 is a cross-section of another sheet material embodying this invention ;

Figure 3 is a cross-section of still another sheet material embodying this invention ;

Figure 4 is a cross-section of yet another sheet material embodying this invention ;

Figure 5 illustrates a dispensing tube according to this invention, with the sealant sheet material and the cap displaced to show their proper orientations and positions ;

Figure 6 is an enlarged cross-section of the orifice area of the dispensing tube, showing a representative sealant sheet material sealed over the orifice ;

Figure 7 is a cross-section of the orifice area and cap, showing the sealant sheet material pierced and folded back against the interior of the dispensing orifice ;

Figure 8 is an enlarged, partially cut-away cross-section of the orifice area and cap, of a tube not in accordance with this invention, wherein the sealant sheet material has not retained a satisfactory deadfold against the interior of the dispensing orifice ;

Figure 9 is a view on line 9-9 of Figure 8 and shows the partial blockage of the orifice by the pierced laminated sheet material ; and

Figure 10 is an elevational, partly sectional view illustrating means to apply radio-frequency heating for sealing the laminated sheet material to the orifice of the container in accordance with this invention.

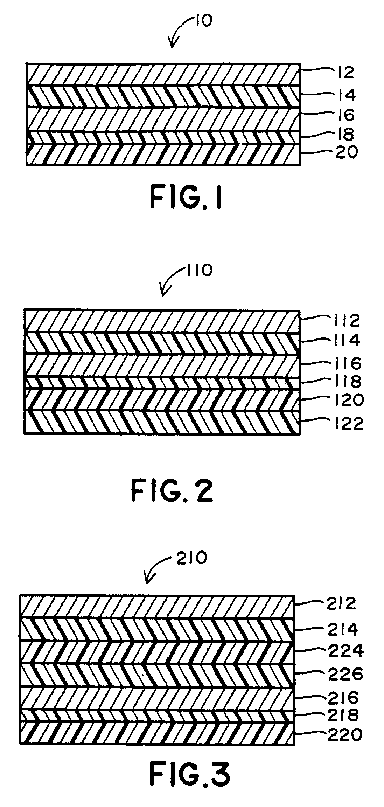

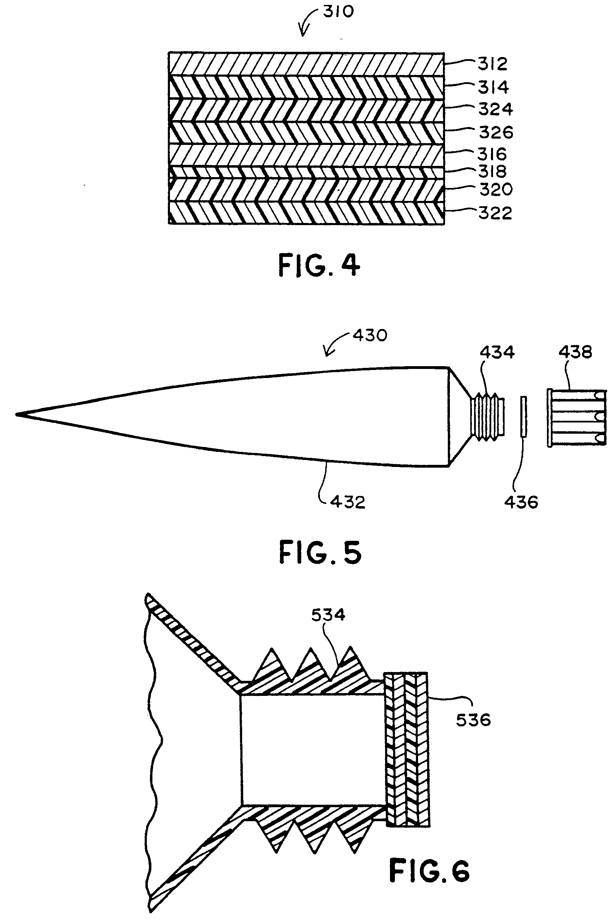

Turning now to the drawings, the special sheet material shown in Figure 1 is generally designated by the numeral 10. Layers 12 and 16 are metal foil. Layers 14 and 20 are polymer layers, and preferably ethylene polymers or copolymers. Layer 20 serves as the sealant layer for adhering to the headpiece of the container tube, as shown in Figure 6. Layer 18 is a primer, and is shown as a layer of exaggerated thickness for illustration purposes only : it is usually so thin as to have negligible thickness, as are the primer layers shown in Figures 2, 3 and 4.

The multi-layer sheet structure in Figure 2 is generally designated as 110 and includes the layers 112 and 116 which are metal foil. Layers 114 and 120 are polymer layers, and preferably ethylene polymers or copolymers. Layer 118 is a primer. Layer 122 is an additional polymer layer especially selected for good adhesion to layer 120 and, as the sealant layer, for good adhesion to the headpiece of a dispensing tube.

Figure 3 illustrates a multi-layer laminate generally designated 210. Layers 212 and 216 are metal foil. Layer 218 is a primer. Layer 220 is a polymer layer. Polymer layers 214, 224 and 226 together perform a function similar to that of layer 14 in Figure 1.

The laminated sheet in Figure 4 is generally designated as 310 and includes metal foil layers 312 and 316. Layers 314, 324 and 326 are polymer layers similar to layers 214, 224 and 226 in Figure 3. Layer 318 is a primer. Layers 320 and 322 are polymer layers similar to layers 120 and 122 in Figure 2.

Figure 5 is an exploded pictorial view of a dispensing tube 430 having a main body portion 432, a headpiece 434, a laminated sealant sheet material 436 to close the orifice in the headpiece, and a cap 438. Cap 438 and seal 436 are shown displaced from the tube for illustration purposes.

In Figure 6, a portion of the headpiece of a tube such as in Figure 5 is shown in enlarged cross-section with the special sheet material 536 shown sealed to the headpiece 534 over the dispensing orifice.

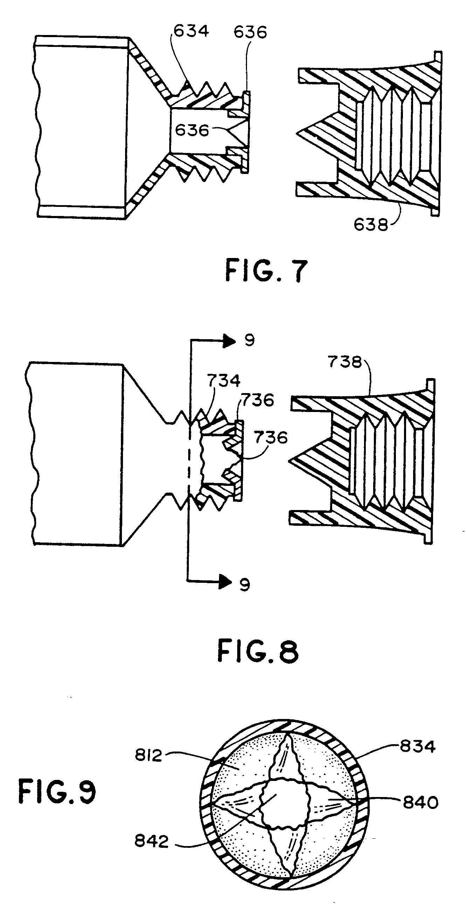

In Figure 7, a portion of the headpiece 634, such as in Figures 5 and 6 is shown in enlarged cross-section, with the laminated sealant sheet material 636 having been punctured, by means of the puncturing point of the cap 638, and folded back against the interior of the dispensing orifice.

Figure 8 is similar to Figure 7 except that a laminated sealant sheet material 736 which is sealed to headpiece 734, and has been punctured by cap 738, is representative of sheet materials which either do not puncture cleanly, or do not retain a deadfold against the dispensing orifice, or both. In any of those cases, sheet material 736, or a portion of it, projects into the orifice and away from the sidewall.

Figure 9 shows the dispensing orifice of Figure 8 as seen from inside the tube. The orifice defined by the headpiece is the circular structure designated 834. In the punctured sheet structure, the foil segments are shown with stippling and are designated 812. This foil segment is covered by the polymer sealant. Between the foil segments 812 are seen portions 840 of internal polymer layers which have stretched, rather than torn as desired. Hole 842 is, then, restricted functional orifice initially useful for dispensing product. As the tube is squeezed to dispense product, the product initially travels along the orifice defined by the headpiece 834. As the leading edge of the product reaches the sheet structure, the central portion of it exits through the functional orifice 842. The remainder of the leading edge of the product encounters the sheet structure and pushes against it, moving the central portions of the sheet material outwardly of the loci shown in Figure 8, and further restricting the opening available for the product to exit the dispensing orifice. Figures 8 and 9 thus represent a structural combination which is undesirable and is not within the scope of the present invention.

In order to meet the performance parameters required by the functions herein described, it is crucial that the improved sheet material meet certain criteria. First, all the layers should be joined together with good adhesion. Lacking good adhesion, and particularly good adhesion between the foil layers and the polymer layers, even though the sheet structure may otherwise be within the structural parameters taught herein, the polymer layers tend to be stretched rather than punctured. The stretched layers would tend to return to their original condition or shape, after puncturing, thus obstructing the orifice as shown in Figure 9. When there is good adhesion, especially to the foil layers, puncturing of the foil controls, to a significant extent, the puncturing and folding of the polymer layers, and retention of the folds against the inner surface of the dispensing orifice.

Second it is essential that the outer layer on one surface of the sheet material be sealable to the tube headpiece. This outer layer is represented by layers 20, 122, 220 and 322 in Figures 1-4.

Thirdly, it is essential that the outer layer on the other surface of the sheet material be a metal foil layer. This outer layer is represented by layers 12, 112, 212 and 312, in Figures 1-4.

Fourthly, sheet materials used in practising the invention should have two layers of metal foil separated by at least one polymer layer. Metal foil serves as an effective barrier to gaseous transmission. In specifying two layers of metal foil, two desirable functions are accomplished. The first desirable function is that the two layers provide the sheet material with good deadfold characteristics for less total foil thickness than would be required for a structure having a single foil layer. And indeed some structures using a single foil layer can be used to seal the orifice of a tube and do retain the required deadfold after puncturing, but they are an excessive amount of expensive metal foil and are difficult to puncture. For example a 2-layer structure using a single 5.0 mil (0.13 mm) layer of foil and 1.0 mil (0.02 mm) of EAA (ethylene acrylic acid copolymer) as a polymer sealant layer provides good gas barrier and good deadfold retention properties, but it too difficult to puncture and is excessively costly. As will be seen hereinafter, in the sheet materials used in practising this invention, the sum of the thicknesses of the two foil layers can be reduced to as little as only 3.0-3.7 mils (0.08 to 0.09 mm) compared with the foil thickness required by a single foil structure. The second desirable function lies in the surprising finding that the double foil structure is also easily punctured, more easily than a similar structure which has but a single 3.0 mil (0.08 mm) layer of foil. Such a single foil structure, however, does not possess the necessary deadfold retention characteristics.

Referring now to the structure layers in particular, the two foil layers are preferably aluminium foil, although other metal foils are contemplated and may be used. The most desirable foils are aluminium foils having the highest purity, such as 1145 alloy. The best functional results are achieved with fully annealed foil. Referring first to the structure of Figure 1, it is seen that foil layer 12 is on one exterior surface of the sheet material, and foil layers 12 and 16 are separated by a polymer layer 14. For best efficiency of use of the strengths of the foil layers, the surface foil layer (i.e. layer 12) is advantageously thicker than the other foil layer, as the overall effect is easier puncturing of the sheet material. It is entirely acceptable, however, and within the scope of the invention, for both foils to be the same thickness, or for the outer foil to be thinner than the inner foil as illustrated in the Examples which follow.

The polymer layers in the structur are selected to serve their several functions, depending on the specific tube structure, and the contemplated product. In a simple structure as in Figure 1, a highly satisfactory polymer for both layers 14 and 20 is ethylene acrylic acid copolymer (EAA). EAA adheres well to foil, and has good chemical resistance to many products. Regarding adhesion to the interior foil layer (e.g. 16 in Figure 1), it is often desirable to use a primer, such as layer 18, in adhering the foil layer to the next adjacent polymer layer, in Figure 1 that layer being layer 20. The significance of primer 18 is that it enhances the interlayer bond between foil layer 16 and polymer layer 20, such that the bond has improved capability to withstand attack by chemical moieties in the product, which attack may otherwise weaken that bond such that the structure cannot be punctured properly and punctures more like the unacceptable structure illustrated in Figures 8 and 9. A highly desirable primer is a chrome-complexed polyacrylic acid polymer which is described in our copending European patent application number 83300445.0 which is herein incorporated by this reference. Wherever in this teaching a primer is suggested as being useful, the above chrome complex primer may be used. Other primers may also be used so long as they provide the desired interlayer adhesion.

In place of the EAA at either or both of layers 14 and 20, other polymers may be used so long as they have good interlayer adhesion within the sheet structure. Illustrative of polymers which may be used are low density polyethylene (LDPE), medium density polyethylene (MDPE), high density polyethylene (HDPE), linear low density polyethylene copolymer (LLDPE), ethylene methacrylic acid (EMAA), and ionomers. It is contemplated that the use of a primer may be required at each layer interface where these other polymers are used adjacent the foil.

5

While EAA is highly satisfactory for both layers 14 and 20, there are some cases where better choices may be made. LDPE, for example is less costly than EAA. It is also less extensible, so that lower interlayer adhesion levels may be tolerated as may be desired for ease of processing in constructing the multiple layer sheet material. Other materials may likewise be selected. Functional adhesion remains essential.

For purposes of description herein, all the polymer layers adjacent a foil layer will be assumed to be EAA, it being understood that other materials can be used in place thereof as above described, so long as the functional requirements are preserved.

Comparing now the structure of FIGURE 2 to that of FIGURE 1, it is seen that FIGURE 2 has an additional layer, namely layer 122. Layer 20 in FIGURE 1 serves as an adhesive to foil layer 16, as the sealant layer to the headpiece of the tube and may serve as a chemical barrier protecting foil layer 16. While such simplicity of design is desirable, the multiplicity of functions imposed on the single layer 20 may require that certain functional compromises be made. By using the additional layer, as at 122 in FIGURE 2, layer 122 may be selected, for example, for desirable properties of excellent adhesion to the tube headpiece, while layer 120 need not have those properties so long as it has good adhesion to both layers 116 and 122. For example, in a typical tube contemplated by this invention, the tube headpiece as at 434 in Figure 5 is HDPE. For good sealing of the sheet structure to the HDPE headpiece, it is advantageous that the surface polymer layer of the sheet structure be a polyethylene rather than an ethylene copolymer. Thus, for example, the composition of layers 122 and 322 in Figures 2 and 4 may be one of the polyethylenes such as LDPE, MDPE, or HDPE. Again the critical criteria are good adhesion to the adjacent polymer layer in the sheet structure and good adhesion to the headpiece.

In some cases, where adequate interlayer is not achieved, it may indeed be desirable to interpose an adhesive layer, not shown, which may or may not be polymeric, between the surface layer (122 ot 322) and the adjacent polymer layer (120 or 320 respectively), or to substitute an adhesive layer for layer 120 or 320.

Comparing now the structure of Figure 3 to that of Figure 1, it is seen that Figure 3 has additional polymer layers between the foil layers. Thus whereas, for example, EAA adheres well to foil, it may be more extensible than desired for the entire contemplated thickness of polymer between the two foil layers. It is also expensive. An alternative to a single layer of EAA as at 14 in Figure 1, is to have two thinner layers, 214 and 226 which adhere well to foil and another intervening layer 224 which adheres well to layers 214 and 226 and has preferred extensibility properties and better cost attributes.

Finally, the structure of Figure 4 combines the desired functional improvements of the structures of Figures 2 and 3 into one structure. Those skilled in the art of multiple layer sheet structures will readily discern the trade-offs of the cost penalties of assembling the more complex structures against their improved performance characteristics and the reduced expense potential where more economical layers are chosen.

It is contemplated that the thickness of the sheet structure will generally be independent of the number of layers in the structure.

The sheet structure used in practising this invention may be assembled by well-known lamination techniques. For example, a structure as in Figure 1 is made as follows. Two layers of aluminium foil are extrusion laminated together. Primer is then applied to the outer surface of one of the foil layers and dried. Finally the primed foil is extrusion coated with a polymer layer. The more complex structures are made by similar known processes, such as by coextrusion coating, coextrusion lamination and multiple pass extrusion processes. It is generally desired that the entire sheet structure, whatever its degree of complexity, be assembled in one in-line operation, in order to minimize adhesion loss due to possible contamination in the extra handling, winding up, and unwinding accompanying multiple pass operations.

Example 1

Two layers of aluminium foil 3.0 mils (0.08 mm) and 0.7 mil (0.02 mm) thick, respectively, are extrusion laminated together using 1.3 mils (0.03 mm) of EAA as the extrusion laminant. The exposed surface of the thinner foil is then primed with a chrome-complex polyacrylic acid primer and dried. The primed foil is then coextrusion coated with two layers, 0.5 mil (0.013 mm) thick, of EAA and LDPE, with the EAA contacting the primed foil.

Example 2

Two layers of aluminium foil are extrusion laminated together using EAA as the extrusion laminant, the thicknesses of the three components being as in Example 1. The exposed surface of the thicker foil is then primed with a chrome-complex polyacrylic acid primer and dried. The primed foil is extrusion coated with 1.0 mil (0.025 mm) EAA.

Example 3

Two layers of aluminium foil, each 1.5 mils (0.038 mm) thick, are extrusion laminated together using 2.0 mils (0.051 mm) of EAA as the extrusion laminant. The exposed surface of one of the foils is then primed with a chrome complex polyacrylic acid primer and dried. The primed foil is extrusion coated with 1.0 mil (0.025 mm) EAA.

Example 4

Two layers of aluminium foil are extrusion laminated together using EAA as the extrusion laminant, the thicknesses of the three components being as in Example 1. The exposed surface of the thinner foil is then primed with a chrome complex polyacrylic acid primer and dried. The primed foil is extrusion coated with 1.0 mil (0.025 mm) EAA.

The sheet structures herein described are applied to the headpieces, such as shown in Figure 6, of conventional collapsible dispensing tubes. If desired, they could indeed be applied to metal tubes also. The polymer surface layer of the sheet structure is sealed to the headpiece, with the foil surface layer thus facing the outside environment. In this way, the tube container is made into a hermetically sealed container unit. The sheet material is generally protected by a cap such as cap 438 in Figure 5. The cap may be emplaced either simultaneously with the sealed sheet material or may be emplaced in a later, separate operation.

In such a hermetically sealed tube, even with the cap removed, the contents are protected from external invasion, whether from gaseous permeation or from intentional or unintentional tampering. If the hermetic seal is compromised, the compromise may be detectable either by visual inspection or by squeezing the tube and observing whether the product is expelled through the closure sheet. Thus small holes, such as from a hypodermic needle or the like, may be detected.

The hermetic seal closure also prevents leakage of liquid-containing products.

When the contained product is to be dispensed for the first time, the sheet material is pierced, e.g. as shown in Figure 7, by a puncturing means which may be economically incorporated into the cap.

Once the sheet material is pierced and folded back against the interior of the dispensing orifice, the tube functions as any conventional unsealed tube, so the product may be dispensed, and the cap can be replaced as a closure pending further intermittent dispensing operations.

As previously mentioned, the tube orifice may be sealed with the laminated sheet by radio-frequency heating. Surprisingly, it has been found that radio-frequency heating in the manner herein described increases the radio-frequency energy transmitted to the seal and reduces the radio-frequency energy transmitted to the sidewall of the tube and to its sideseam.

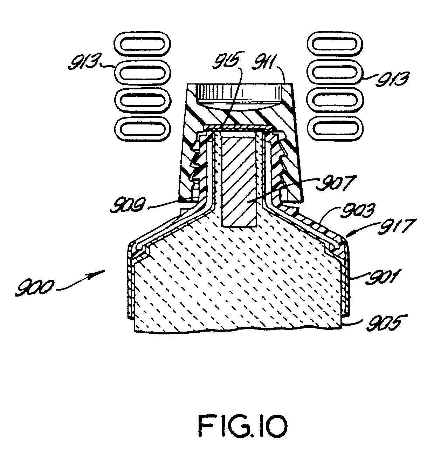

Thus referring to Figure 10, there is shown a container generally designated as 900 having a sidewall 901 and a plastics headpiece 903. The container is placed upon a non-metallic working mandrel 905, and a ferrite cylinder 907 is disposed within the neck 909 of the container.

The container neck 909 is externally screw threaded for engagement with a matching internally threaded cap 911. A radio-frequency field coil 913, energized from an external radio-frequency energy source (not shown), serves to bond the laminated sheet 915 across the container orifice and provide a hermetic seal.

While the container sidewall may have the usual known laminated structure, the application of radio-frequency heating to effect sealing of the orifice is most advantageous when the sidewall contains an aluminium foil. Also, the laminated sheet 915 may have any of the structures heretofore described in connection with Figures 1-4, and as was previously noted, includes two aluminium foil layers.

During heat sealing the orifice with the laminated sheet, it is important to avoid excessive heating of an aluminium foil layer at the end of the container sidewall 901. Otherwise, the excessive heat could degrade or destroy the head bond and the sideseam near the head as shown at 917.

Surprisingly, it has been found that when ferrite is placed in the neck of the tube as shown in Figure 10, the radio-frequency energy will seal the orifice to provide an effective hermetic seal without degrading or destroying the sidewall and the sideseam.

## Claims

1. A collapsible dispensing tube having a body and a headpiece with a dispensing orifice therein, and a multiple layer sheet material (e.g. 10) having first and second outer surface layers the first of which is adhered to the outer end of the headpiece orifice for closing the orifice, the sheet material (e.g. 10) comprising first and second layers (16, 12) of metal foil, and a third layer (14) of polymeric material, disposed between and firmly

7

adhered to the first and second layers (12, 16), and a fourth layer (20) of polymeric material, firmly adhered to first layer (16), said fourth layer comprising the first outer surface layer of the sheet material and being the means which maintains the sheet material adhered to the headpiece, the sheet material having an overall thickness in the range of 5,0 - 8,0 mils (0,13 - 0,20 mm), the aggregate thickness of the two foil layers being 3 to less than 5 mils (0,08 - 0,13 mm).

2. A tube according to claim 1, further including a fifth layer (e.g. 122), of polymeric material on the outer surface of the fourth layer (e.g. 120), said fifth layer serving as the first outer surface layer of said sheet material (110), and the fourth layer for instance being an adhesive layer.

3. A tube according to claim 1 or claim 2, wherein a plurality of polymer layers (e.g. 214, 224, 226) are disposed between the first and second foil layers.

4. A tube according to claim 1, 2 or 3, in combination with a closure cap (638, 738) for said headpiece, the closure cap having means for piercing the sheet material.

5. A method of hermetically sealing a collapsible dispensing tube which includes a headpiece having a dispensing orifice, the method comprising adhering a multiple layer sheet material (e.g. 10) having first and second outer surface layers over the outer end of said orifice and thereby closing and sealing said orifice, the multiple layer sheet material comprising first and second layers (16, 12) of metal foil, a third layer (14), of polymeric material, disposed between the first and second layers and firmly adhered thereto, and a fourth layer (20), of polymeric material, firmly adhered to said first layer (16), the fourth layer comprising the first outer surface layer of the sheet material and in use being the means which maintains the sheet material adhered to said headpiece, the sheet material having an overall thickness in the range of 5,0 - 8,0 mils (0,13 - 0,20 mm), the aggregate thickness of the two foil layers being 3 to less than 5 mils (0,08 - 0,13 mm).

6. A method according to claim 5, wherein said sheet material (e.g.110) used includes a fifth layer (122), of polymeric material, on the outer surface of the fourth layer (120) said fifth layer serving as the first outer surface layer of the sheet material.

7. A method according to claim 5 or claim 6, wherin a plurality of polymeric layers (e.g. 214, 224, 226) are disposed between the first and second foil layers.

8. A method according to claim 5, 6 or 7, wherein the tube is placed over a working mandrel, a generally cylindrical ferrite material (907) is placed in a neck portion (909) of the headpiece in spaced relation to the interior of the neck portion and the orifice, the multiple layer sheet material (915) is placed across said dispensing orifice and radio frequency energy is applied to hermetically seal the sheet material to the orifice.

9. A deadfoldable multi layer sheet material for use in sealing the outer ends of dispensing orifices of squeeze-type dispensing tubes, comprising two metal foil layers (12 ; 16 ; 112, 116 ; 212, 216 ; 312, 316), at least one polymeric material layer (14 ; 114 ; 214, 224, 226 or 314, 324, 326) between the foil layers and firmly adhered thereto, and another polymeric material layer (20, 122, 220, 320) adhered directly or by means of a further polymeric layer or layers to one of the metal foil layers, the other polymeric layer providing one of the exterior surface of the sheet material and being a heat-activatable polymeric adherent, the sheet material having an overall thickness in the range of 5,0 - 8,0 mils (0,13 - 0,20 mm), the aggregate thickness of the two foil layers being 3 to less than 5 mils (0,08 - 0,13 mm).

10. A tube according to any of claims 1 to 4, wherein the multiple layer sheet material has such a deadfold retention characteristic that when pierced and displaced interiorly into the orifice, it will conform to the interior surface of the orifice.

## Patentansprüche

1. Zusammendrückbare Spendertube mit einem Tubenkörper und einem Kopfstück mit einer Abgabeöffnung in diesem sowie mit einem Mehrschichtflachmaterial (z.B. 10) mit einer ersten und einer zweiten Außenflächenschicht, von denen die erste mit dem äußeren Ende der Kopfstücköffnung zum Schließen der Öffnung in Haftverbindung steht und wobei das Flachmaterial (z.B. 10) eine erste und eine zweite Schicht (16,12) aus Metallfolie und eine zwischen der ersten und der zweiten Schicht (12,16) angeordnete und in fester Haftverbindung mit diesen stehende dritte Schicht (14) aus polymerem Material sowie eine mit der ersten Schicht (16) in fester Haftverbindung stehende vierte Schicht (20) aus polymerem Material umfaßt, die die erste Außenflächenschicht des Flachmaterials umfaßt und das Mittel bildet, das das Flachmaterial in Haftverbindung mit dem Kopfstück hält, wobei das Flachmaterial eine Gesamtdicke im Bereich vom 5,0 - 8,0 mil (0,13 - 0,20 mm) aufweist und die Aggregatdicke der beiden Folienschichten 3 bis weniger als 5 mil (0,08 - 0,13 mm) beträgt.

2. Tube nach Anspruch 1, bei der des weiteren eine fünfte Schicht (z.B, 122) aus polymerem Material auf der Außenfläche der vierten Schicht (z.B. 120) vorhanden ist, wobei die fünfte Schicht als die erste Außenflächenschicht des Flachmaterials (110) dient und die vierte Schicht zum Beispiel eine Klebstoffschicht ist.

3. Tube nach Anspruch 1 oder Anspruch 2, bei der eine Mehrzahl polymerer Schichten (z.B. 214, 224, 226) zwischen der ersten und der zweiten Folienschicht angeordnet ist.

4. Tube nach Anspruch 1, 2 oder 3, in Kombination mit einer Verschlußkappe (638, 738) für das Kopfstück, wobei die Verschlußkappe eine Einrichtung zum Durchbohren des Flachmaterials aufweist.

5. Verfahren zur hermetischen Abdichten einer zusammendrückbaren Spendertube, die ein Kopfstück mit einer Abgabeöffnung aufweist, wobei das Verfahren darin besteht, daß ein Mehrschichtflachmaterial (z.B. 10) mit einer ersten und einer zweiten Außenflächenschicht über dem äußeren Ende der Öffnung in Haftverbindung gebracht und dadurch die Öffnung geschlossen und abgedichtet wird, wobei das Mehrschichtflachmaterial eine erste und eine zweite schicht (16,12) aus Metallfolie, eine zwischen der ersten und der zweiten Schicht angeordnete und in fester Haftverbindung mit dieser stehende dritte Schicht (14) aus polymerem Material sowie eine in fester Haftverbindung mit der ersten Schicht (16) stehende vierte Schicht (20) aus polymerem Material umfaßt und die vierte Schicht die erste Außenflächenschicht des Flachmaterials umfaßt und im Gebrauch das Mittel bildet, das das Flachmaterial in Haftverbindung mit dem Kopfstück hält, wobei das Flachmaterial eine Gesamtdicke im Bereich von 5,0 - 8,0 mil (0,13-0,20 mm) aufweist und die Aggregatdicke der beiden Folienschichten 3 bis weniger als 5 mil (0,08 - 0,13 mm) beträgt.

6. Verfahren nach Anspruch 5, bei dem das verwendete Flachmaterial (z.B. 110) eine fünfte Schicht (122) aus polymerem Material auf der Außenfläche der vierten Schicht (120) aufweist und die fünfte Schicht als die erste Außenflächenschicht des Flachmaterials dient.

7. Verfahren nach Anspruch 5 oder Anspruch 6, bei dem eine Mehrzahl polymerer Schichten (z.B. 214, 224, 226) zwischen der ersten und der zweiten Folienschicht angeordnet ist.

8. Verfahren nach Anspruch 5, 6 oder 7, bei dem die Tube über einen Arbeitsdorn gebracht, ein Ferritmaterial (907) von zylindrischer Grundform in einen Halsbereich (909) des Kopfstücks mit bestand zum Inneren des Halsbereichs und der Öffnung eingebracht, das Mehrschichtflachmaterial (915) über die Abgabeöffnung gelegt und Hochfrequenzenergie zum hermetischen Aufsiegeln des Flachmaterials auf die Öffnung zugeführt wird.

9. Totfaltbares Mehrschichtflachmaterial zur Verwendung zum Abdichten der äußeren Enden von Abgabeöffnungen von Spenderquetschtuben, bestehend aus zwei Metallfolienschichten (12, 16 ; 112, 116 ; 212, 216 ; 312, 316), zumindest einer Polymermaterialschicht (14 ; 114 ; 214, 224, 226 Oder 314, 324, 326) zwischen den Folienschichten und in fester Haftverbindung mit diesen sowie einer weiteren Polymermaterialschicht (20, 122, 220, 320), die direkt oder mittels einer zusätzlichen polymeren Schicht oder Schichten mit einer der Metallfolienschichten in Haftverbindung steht, wobei die weitere polymere Schicht eine der Außenflächen des Flachmaterials darbietet und ein wärmeaktivierbares polymeres Haftmittel bildet, wobei das Flachmaterial eine Gesamtdicke im Bereich von 5,0 - 8,0 mil (0,13 - 0,20 mm) aufweist und die Aggregatdicke der beiden Folienschichten 3 bis weniger als 5 mil (0,08 - 0,13 mm) beträgt.

10. Tube nach einem der Ansprüche 1 bis 4, bei der das Mehrschichtflachmaterial derartige Totfaltenhalteeigenschaften besitzt, das es sich im durchbohrten und nach innen in die Öffnung verdrängten Zustand an die innere Oberfläche der Öffnung anpaßt.

## Revendications

1. Tube distributeur compressible, comportant un corps et une tête dans laquelle est formé un orifice de distribution, ainsi qu'un matériau en feuille à couches multiples (par exemple 10) qui comprend une première et une seconde couches superficielles extérieures dont la première adhère à l'extrémité externe de l'orifice de la tête pour obturer cet orifice, le matériau en feuille (par exemple 10) comprenant une première et une deuxième couches (16, 12) de feuille métallique mince, une troisième couche (14) de matière polymère, disposée entre la première et la deuxième couches (12, 16) auxquelles elle adhère solidement, et une quatrième couche (20) de matière polymère, adhérant solidement à la première couche (16), cette quatrième couche constituant la première couche superficielle extérieure et formant les moyens par lesquels est maintenue l'adhérence du matériau en feuille à la tête, le matériau en feuille ayant une épaisseur totale dans la gamme de 0,13 à 0,20 mm (5,0 à 8,0 millièmes de pouce), la somme des épaisseurs des deux couches de feuille métallique étant comprise entre 0,08 et moins de 0,13 mm (3 - 5 millièmes de pouce).

2. Tube selon la revendication 1, comprenant en outre une cinquième couche (par exemple 122) de matière polymère sur la surface externe de la quatrième couche (par exemple 120), cette cinquième couche servant de première couche superficielle extérieure dudit matériau en feuille (110) et la quatrième couche étant par exemple une couche adhésive.

3. Tube selon la revendication 1 ou 2, dans lequel plusieurs couches de polymère (par exemple 214, 224, 226) sont disposées entre la première et la deuxième couches de feuille métallique.

4. Tube selon l'une quelconque des revendications 1 à 3, en combinaison avec un capuchon de fermeture (638, 738) pour ladite tête, le capuchon de fermeture étant muni de moyens pour percer le matériau en feuille.

5. Procédé de fermeture hermétique d'un tube distributeur compressible qui comprend une tête munie d'un orifice de distribution, le procédé consistant à coller, sur l'extrémité externe dudit orifice, un matériau en feuille à couches multiples (par exemple 10) comportant une première et une seconde couches superficielles extérieures et, de la sorte, obturer et sceller ledit orifice, le matériau en feuille à couches multiples comprenant une première et une deuxième couche (16, 12) de feuille métallique mince, une troisième couche (14) de matière polymère, disposée entre la première et la deuxième couches auxquelles elle adhère solidement, et une quatrième couche (20) de matière polymère, adhérant solidement à ladite première couche (16), cette quatrième couche constituant la première couche superficielle extérieure du matériau en feuille et formant à l'usage les moyens par lequels est maintenue l'adhérence du matériau en feuille à la tête, le matériau en feuille ayant une épaisseur totale dans la gamme de 0,13 à 0,20 mm (5,0 à 8,0 millièmes de pouce), la somme des épaisseurs des deux couches de feuille métallique étant comprise entre 0,08 et moins de 0,13 mm (3 - 5 millièmes de pouce).

6. Procédé selon la revendication 5, dans lequel ledit matériau en feuille (par exemple 110) utilisé comprend une cinquième couche (122) de matière polymère sur la surface externe de la quatrième couche (120), cette cinquième couche servant de première couche superficielle extérieure du matériau en feuille.

7. Procédé selon la revendication 5 ou 6, dans lequel plusieurs couches de polymère (par exemple 214, 224, 226) sont disposées entre la première et la deuxième couches de feuille métallique.

8. Procédé selon l'une quelconque des revendications 5 à 7, dans lequel le tube est placé sur un mandrin de façonnage, une pièce de ferrite généralement cylindrique (907) est placée dans le goulot de la tête, à distance de la surface intérieure du goulot et de l'orifice, le matériau en feuille à couches multiples (915) est placé en travers dudit orifice de distribution et de l'énergie à haute fréquence est appliquée pour souder hermétique-met le matériau en feuille sur l'orifice.

9. Matériau en feuille à couches multiples déformable plastiquement par pliage, utilisable pour fermer hermétiquement les orifices de distribution de tubes distributeurs du type à expression du contenu par écrasement, comprenant deux couches de feuille métallique mince (12 ; 16 ; 112, 116 ; 212, 216 ; 312, 316), au moins une couche de matière polymère (14 ; 114 ; 214, 224, 226 ou 314, 324, 326) entre les couches de feuille métallique auxquelles elle adhère solidement, et une autre couche de matière polymère (20, 122, 220, 320) collée directement ou au moyen d'une couche ou de couches de polymère supplémentaires à l'une des couches de feuille métallique, l'autre couche de polymère constituant l'une des surfaces extérieures du matériau en feuille et étant un adhésif polymère activable par la chaleur, le matériau en feuille ayant une épaisseur totale dans la gamme de 0,13 à 0,20 mm (5,0 à 8,0 millièmes de pouce), la somme des épaisseurs des deux couches de feuille métallique étant comprise entre 0,08 et moins de 0,13 mm (3 - 5 millièmes de pouce).

10. Tube selon l'une quelconque des revendications 1 à 4, dans lequel le matériau en feuille à couches multiples a une caractéristique de rétention de la déformation plastique par pliage telle que quand il a été perforé et refoulé vers l'intérieur dans l'orifice, il épouse la forme de la surface intérieure de l'orifice.

10

12
14
16
18
20

FIG. 1

110

112
114
116
118
120
122

FIG. 2

210

212
214
224
226
216
218
220

FIG.3

310

312
314
324
326
316
318
320
322

FIG. 4

430

434

438

432

436

FIG. 5

534

536

FIG.6

634  636

636

638

**FIG. 7**

9

734  738
736

736

9

**FIG. 8**

812  834

**FIG.9**  840

842

FIG.10